# EUROPEAN PATENT APPLICATION

(11) **EP 4 618 070 A1**
(43) Date of publication of application: **17.09.2025**
(21) Application number: 24806090.7
(22) Date of filing: 25.01.2024
(51) Int. Cl.: G09G 5/393

(54) **REFRESH RATE SWITCHING METHOD AND TERMINAL DEVICE**

(30) Priority: 17.05.2023 CN 202310565685
(71) Applicant: Huawei Technologies Co., Ltd., Shenzhen, Guangdong 518129 (CN)
(72) Inventor: ZHU, Shaoxiong, Shenzhen, Guangdong 518129 (CN); CHEN, Shengwu, Shenzhen, Guangdong 518129 (CN); LEI, Tingwu, Shenzhen, Guangdong 518129 (CN); YU, Chaozhi, Shenzhen, Guangdong 518129 (CN); ZHANG, Jinlong, Shenzhen, Guangdong 518129 (CN); DONG, Yujie, Shenzhen, Guangdong 518129 (CN); MENG, Tao, Shenzhen, Guangdong 518129 (CN)
(74) Representative: MERH-IP Matias Erny Reichl Hoffmann Patentanwälte PartG mbB
(86) International application number: PCT/CN2024/074109
(87) International publication number: WO 2024/234726

(57) **Abstract**

A refresh rate change method and a terminal device (10) are provided, which are applied to the field of terminal technologies, to resolve a problem that the terminal device (10) cannot flexibly complete refresh rate change. The method includes: The terminal device (10) displays an N^{th} frame of image, where a refresh rate of the N^{th} frame of image is a first refresh rate. The terminal device (10) detects a preset operation, where the preset operation indicates a target refresh rate, and the target refresh rate is different from the first refresh rate. The terminal device (10) changes a level of a refresh rate control pin of a system on chip of the terminal device (10) based on the target refresh rate. The terminal device (10) displays an (N+1)^{th} frame of image in response to the level change, where a refresh rate of the (N+1)^{th} frame of image is the target refresh rate. The method is applied to a refresh rate change process of the terminal device.

## Description

This application claims priority to Chinese Patent Application No. 202310565685.3, filed with the China National Intellectual Property Administration on May 17, 2023 and entitled "REFRESH RATE CHANGE METHOD AND TERMINAL DEVICE", which is incorporated herein by reference in its entirety.

### TECHNICAL FIELD

Embodiments of this application relate to the field of terminal technologies, and in particular, to a refresh rate change method and a terminal device.

### BACKGROUND

With development of terminal technologies, terminal devices (which may also be described as electronic devices) such as mobile phones and tablet computers mostly use a combination of a high refresh rate and a low refresh rate for application, and display images at different refresh rates in different scenarios, to meet different requirements of users. For example, when a user plays a game or watches a video on a mobile phone, a screen with a high refresh rate can bring smoother image displaying and better visual experience. Alternatively, when a battery level of a mobile phone of a user is low, a screen with a low refresh rate can reduce power consumption, and help improve a battery life of the mobile phone. During actual application, a terminal device needs to perform refresh rate change based on a use requirement.

Refresh rate change manners of terminal devices with different architectures are also different. Currently, central processing unit (central processing unit, CPU) architectures of terminal devices are mainly classified into two types: a complex instruction system computer (the X86 architecture) (which may also be described as an X86 architecture or an X86 platform), and a mobile hardware platform (advanced RISC machine, ARM) (which may also be described as an ARM architecture or an ARM platform). A mobile industry processor (mobile industry processor interface, MIPI) display serial interface is characterized with flexibility, diverse compatibility, and low costs, and therefore is widely used in the ARM and X86 CPU architectures. In addition, an MIPI display serial interface protocol specifies that an MIPI data link can be used to transmit video data and control instructions. Therefore, for the common ARM architecture, refresh rate change of a display module is controlled by delivering an instruction on an MIPI link. Different from the ARM architecture, for the X86 architecture, products pursue standardization, and no instruction for configuring an MIPI link is developed to control refresh rate change of a display module. Therefore, in the existing X86 architecture, refresh rate change of the display module cannot be flexibly controlled through an MIPI.

### SUMMARY

Embodiments of this application provide a refresh rate change method and a terminal device. The terminal device can flexibly complete refresh rate change and optimize a refresh rate change strategy.

To achieve the foregoing technical objectives, embodiments of this application provide the following technical solutions.

According to a first aspect, a refresh rate change method is provided. The method includes: A terminal device displays an N^{th} frame of image, where a refresh rate of the N^{th} frame of image is a first refresh rate. The terminal device detects a preset operation, where the preset operation indicates a target refresh rate, and the target refresh rate is different from the first refresh rate. The terminal device changes a level of a refresh rate control pin of a system on chip of the terminal device based on the target refresh rate. The terminal device displays an (N+1)^{th} frame of image in response to the level change, where a refresh rate of the (N+1)^{th} frame of image is the target refresh rate.

**In** this way, after detecting the preset operation, the terminal device changes a level of the terminal device based on the target refresh rate indicated by the preset operation. Refresh rate change is implemented based on a level change, and refresh rate change is implemented without depending on an interface function such as a change instruction. This optimizes a refresh rate change manner, and the terminal device can flexibly complete refresh rate change.

According to the first aspect, the preset operation includes a preset operation that can trigger the terminal device to change a refresh rate.

According to the first aspect, in a possible implementation, the target refresh rate is a refresh rate that should be implemented after a user indicates, by using the preset operation, the terminal device to complete refresh rate change.

In some examples, the terminal device receives the preset operation triggered by the user, and determines the target refresh rate in response to the preset operation.

In this way, the preset operation for triggering refresh rate change is preset, and the terminal device is quickly triggered, based on the preset operation, to change the refresh rate, so that a refresh rate change process is simplified.

According to the first aspect, in a possible implementation, that the terminal device changes a level of a refresh rate control pin of a system on chip of the terminal device based on the target refresh rate includes: The terminal device determines, based on a preset correspondence, a level corresponding to the target refresh rate; and changes the current level of the refresh rate control pin of the system on chip of the terminal device to the level corresponding to the target refresh rate.

According to the first aspect, in a possible implementation, the preset correspondence is a correspondence between a refresh rate and a level.

In some examples, the level is a voltage value corresponding to a preset refresh rate. The terminal device changes to different refresh rates based on different levels.

In some examples, a plurality of refresh rates are represented by different values of one level.

In some examples, a plurality of refresh rates are represented by a plurality of levels.

In this way, the correspondence between a level and a refresh rate is preset, so that the terminal device quickly determines the level corresponding to the target refresh rate, and can subsequently quickly completes refresh rate change.

According to the first aspect, in a possible implementation, the refresh rate control pin is a pin, in a general-purpose input/output port of the system on chip, pre-configured to indicate a refresh rate change.

According to the first aspect, in a possible implementation, the terminal device includes a display driver integrated circuit, and the display driver integrated circuit includes an input pin; and after the terminal device changes the level of the refresh rate control pin of the system on chip of the terminal device based on the target refresh rate, the method further includes: The input pin correspondingly changes a level of the input pin in response to the level change of the refresh rate control pin.

According to the first aspect, in a possible implementation, that the terminal device displays an (N+1)^{th} frame of image in response to the level change includes: The terminal device rewrites a register value of the terminal device based on a changed level in response to the level change. The terminal device changes a refresh rate of the terminal device to the target refresh rate based on a rewritten register value of the terminal device. The terminal device displays the (N+1)^{th} frame of image based on the target refresh rate.

According to the first aspect, in a possible implementation, the terminal device further includes the display driver integrated circuit and a display panel, and the display driver integrated circuit includes a register; and that the terminal device displays an (N+1)^{th} frame of image in response to the level change includes: The display driver integrated circuit rewrites a register value of the register based on the changed level in response to the level change of the refresh rate control pin. The display driver integrated circuit changes a refresh rate of the display driver integrated circuit to the target refresh rate based on a rewritten register value of the register. The display driver integrated circuit drives, based on the target refresh rate, the display panel to display the (N+1)^{th} frame of image.

According to the first aspect, in a possible implementation, that the terminal device displays the (N+1)^{th} frame of image based on the target refresh rate includes: The terminal device adjusts a frame synchronization signal based on the target refresh rate. The terminal device refreshes to display the (N+1)^{th} frame of image based on an adjusted frame synchronization signal.

According to the first aspect, in a possible implementation, the terminal device further includes the display driver integrated circuit and the display panel, and that the display driver integrated circuit drives, based on the target refresh rate, the display panel to display the (N+1)^{th} frame of image includes: The display driver integrated circuit adjusts a frame synchronization signal based on the target refresh rate. The display driver integrated circuit sends an adjusted frame synchronization signal to the display panel. The display panel refreshes to display the (N+1)^{th} frame of image based on the frame synchronization signal.

In this way, the frame synchronization signal is adjusted based on a changed refresh rate, so that the display panel refreshes to display the image based on the adjusted frame synchronization signal, thereby implementing refresh rate change of the display panel.

In some examples, the register stores various preset settings, for example, a correspondence between a register value and a working mode, and a correspondence between a register value and information included in a working mode. The information included in the working mode includes a level, a tearing effect signal, a circuit, and a refresh rate.

For example, the register includes a mapping relationship between a register value and a level, a mapping relationship between a register value and a circuit, and a mapping relationship between a register value and a tearing effect signal.

According to the first aspect, in a possible implementation, after the terminal device obtains the rewritten register value of the terminal device, the method further includes: The terminal device adjusts a tearing effect signal of the terminal device based on the rewritten register value of the terminal device. The terminal device changes a frame rate of the terminal device based on an adjusted tearing effect signal, and generates the (N+1)^{th} frame of image based on a changed frame rate.

According to the first aspect, in a possible implementation, the tearing effect signal is used to synchronize a refresh rate with a frame rate.

According to the first aspect, in a possible implementation, after the display driver integrated circuit obtains the rewritten register value of the register, the method further includes: The display driver integrated circuit adjusts a tearing effect signal of the display driver integrated circuit based on the rewritten register value of the register. The display driver integrated circuit sends an adjusted tearing effect signal to the system on chip. The system on chip changes a frame rate of the system on chip based on the adjusted tearing effect signal, and generates the (N+1)^{th} frame of image based on a changed frame rate.

In this way, a rate (frame rate) at which the system on chip generates a picture is reversely controlled based on the tearing effect signal, and a refresh rate of the display panel of the terminal device is controlled based on the frame synchronization signal, to synchronize the refresh rate with the frame rate during screen switching, so that refresh rate/frame rate change can be actually completed, and screen tearing caused by changing only the refresh rate and not correspondingly changing the frame rate is avoided.

According to a second aspect, a terminal device is provided. The terminal device includes a system on chip, a display driver integrated circuit, and a display panel, and the system on chip includes a refresh rate control pin. The display panel is configured to display an N^{th} frame of image, where a refresh rate of the N^{th} frame of image is a first refresh rate. The system on chip is configured to detect a preset operation, where the preset operation indicates a target refresh rate, and the target refresh rate is different from the first refresh rate. The system on chip is further configured to change a level of the refresh rate control pin of the system on chip based on the target refresh rate. The display driver integrated circuit is configured to drive, in response to the level change, the display panel to display an (N+1)^{th} frame of image, where a refresh rate of the (N+1)^{th} frame of image is the target refresh rate. The display panel is further configured to display the (N+1)^{th} frame of image.

According to the second aspect, in a possible implementation, the system on chip is further configured to determine, based on a preset correspondence, a level corresponding to the target refresh rate, where the preset correspondence is a correspondence between a refresh rate and a level. The system on chip is further configured to change the current level of the refresh rate control pin to the level corresponding to the target refresh rate.

According to the second aspect, in a possible implementation, the display driver integrated circuit includes a register. The display driver integrated circuit is further configured to rewrite a register value of the register based on a changed level in response to the level change of the refresh rate control pin. The display driver integrated circuit is further configured to change a refresh rate of the display driver integrated circuit to the target refresh rate based on a rewritten register value of the register. The display driver integrated circuit is further configured to drive, based on the target refresh rate, the display panel to display the (N+1)^{th} frame of image.

According to the second aspect, in a possible implementation, the display driver integrated circuit is further configured to adjust a tearing effect signal of the display driver integrated circuit based on the rewritten register value of the register. The display driver integrated circuit is further configured to send an adjusted tearing effect signal to the system on chip. The system on chip is further configured to: change a frame rate of the system on chip based on the adjusted tearing effect signal, and generate the (N+1)^{th} frame of image based on a changed frame rate.

According to a third aspect, a terminal device is provided. The terminal device includes a processor and a memory, the memory is coupled to the processor, and the memory is configured to store computer-readable instructions. When the processor reads the computer-readable instructions from the memory, the terminal device is enabled to perform the method according to any one of the first aspect or the implementations of the first aspect.

According to a fourth aspect, a chip system is provided. The chip system includes at least one processor and at least one interface circuit. The at least one interface circuit is configured to: perform a transceiver function, and send instructions to the at least one processor. When the at least one processor executes the instructions, the at least one processor performs the method according to any one of the first aspect or the implementations of the first aspect.

According to a fifth aspect, a computer-readable storage medium is provided. The computer-readable storage medium includes a computer program. When the computer program runs on a terminal device, the terminal device is enabled to perform the method according to any one of the first aspect or the implementations of the first aspect.

According to a sixth aspect, a computer program product is provided. When the computer program product runs on a computer, the computer is enabled to perform the method according to any one of the first aspect or the implementations of the first aspect.

For technical effect corresponding to any one of the second aspect to the sixth aspect and the implementations of the second aspect to the sixth aspect, refer to the technical effect corresponding to any one of the first aspect and the implementations of the first aspect. Details are not described herein again.

### BRIEF DESCRIPTION OF DRAWINGS

FIG. 1 is a diagram of a structure of a screen of a terminal device according to an embodiment of this application;
FIG. 2 is a diagram of timing of refresh rate change by a terminal device according to an embodiment of this application;
FIG. 3 is a diagram of an architecture of refresh rate change by a terminal device according to an embodiment of this application;
FIG. 4 is a diagram of a hardware structure of a terminal device according to an embodiment of this application;
FIG. 5 is a flowchart of interaction between modules in a refresh rate change method according to an embodiment of this application;
FIG. 6 is a diagram of an architecture of a refresh rate change system according to an embodiment of this application;
FIG. 7 is a schematic flowchart of a refresh rate change method according to an embodiment of this application;
FIG. 8 is a diagram of an application scenario of a refresh rate change method according to an embodiment of this application;
FIG. 9 is a diagram of timing of refresh rate change according to an embodiment of this application;
FIG. 10 is a schematic flowchart of another refresh rate change method according to an embodiment of this application; and
FIG. 11 is a diagram of a structure of a terminal device according to an embodiment of this application.

### DESCRIPTION OF EMBODIMENTS

In descriptions of embodiments of this application, unless otherwise specified, "/" represents an "or" relationship. For example, A/B may represent A or B. "And/or" in this specification is merely an association relationship for describing associated objects, and represents that three relationships may exist. For example, A and/or B may represent the following three cases: Only A exists, both A and B exist, and only B exists.

Terms "first" and "second" mentioned below are merely used for the purpose of description, and shall not be understood as indicating or implying relative importance or implicitly indicating a quantity of indicated technical features. Therefore, a feature limited by "first" or "second" may explicitly or implicitly include one or more such features.

In the descriptions of embodiments of this application, unless otherwise specified, "a plurality of" means two or more than two. In embodiments of this application, the term "example", "for example", or the like is used to represent giving an example, an illustration, or a description. Any embodiment or design scheme described with "example" or "for example" in embodiments of this application should not be explained as being more preferred or having more advantages than another embodiment or design scheme. Exactly, use of the term "example", "for example", or the like is intended to present a relative concept in a specific manner.

Some terms and related technologies in this application are first described, to facilitate understanding by a person skilled in the art.

A display driver integrated circuit (display driver integrated circuit, DDIC) is one of main control elements of a display panel, and a main function is to send a drive signal and image data to the display panel in a form of an electrical signal, so that the display panel displays an image.

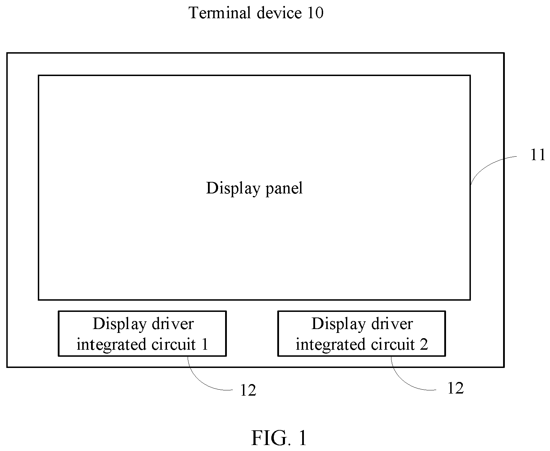

FIG. 1 is a diagram of a structure of a screen of a terminal device 10. In FIG. 1, an example in which the terminal device includes two display driver integrated circuits 12 (for example, a display driver integrated circuit 1 and a display driver integrated circuit 2) is used. A display panel (panel) 11 is a display area (light emitting area) of the screen of the terminal device. The two display driver integrated circuits 12 (for example, the display driver integrated circuit 1 and the display driver integrated circuit 2) are packaged under the screen. For example, the two display driver integrated circuits are directly bonded to a glass substrate by using a chip on glass (chip on glass, cog) technology.

A refresh rate (refresh rate) is a quantity of times of image update on a screen within a unit time of one second. A unit is Hz (Hz). For example, if the refresh rate of the screen is 60 Hz, it indicates that the screen performs 60 times of image refresh per second. If the refresh rate is higher, a quantity of times the screen performs display image refresh per second is larger. Correspondingly, a refresh time interval between images is shorter, and image smoothness is higher.

A frame rate (frame rate) is a rate at which a graphics processing unit (graphics processing unit, GPU) in a system on chip (system on chip, SoC) draws images per second. If the frame rate is higher, a quantity of images the graphics processing unit draws is larger, and image displaying is smoother and more realistic.

It may be understood that the frame rate is a quantity of frames of images generated by the SoC per second. The refresh rate is a quantity of times the screen refreshes per second, which determines a quantity of times the screen displays images per second. If the frame rate is higher than the refresh rate, some image frames cannot be displayed to a user on the screen, and image displaying on the screen may stutter and lack smoothness. In addition, due to asynchronization, tearing effect (tearing effect, TE) may occur between two frames of images on the screen. If the frame rate is lower than the refresh rate, a same image may be displayed repeatedly on the screen, causing image stuttering. In other words, when the frame rate is not synchronized with the refresh rate, screen tearing or the like may occur. Usually, the refresh rate is the same as the frame rate. When the refresh rate of the screen changes, the frame rate needs to be changed accordingly to avoid screen tearing.

During actual application, a high refresh rate is mainly applied to a game scenario and a fast sliding scenario such as a desktop sliding scenario. In this way, image smoothness during a user operation is improved. Most use scenarios are still static display, low-speed sliding, and low-frame-rate video playback scenarios. In these scenarios, a low refresh rate and a low frame rate can ensure image smoothness, reduce power consumption, and improve a battery life.

A tearing effect signal (which may also be described as a TE signal) is a signal generated by a display driver integrated circuit, and is used to avoid a tearing problem during image refresh in an image display process. The TE signal is a periodic signal. A terminal device configured with an MIPI command mode (command mode) usually performs synchronization and control of an SoC frame rate and a screen refresh rate based on the TE signal. Procedures such as image drawing, rendering, synthesis, and screen refresh display are synchronized based on the TE signal. In each periodicity corresponding to a same TE signal, an SoC performs drawing, rendering, and synthesis on one or more layers to obtain a frame of image. A display driver encapsulates the image into a data packet, and transmits the image data packet to the display driver integrated circuit through an MIPI. The display driver integrated circuit decapsulates the image data packet, and refreshes to display the image.

For ease of understanding technical content of this solution, the following first describes a specific process of displaying an image on a screen of a terminal device. An SoC performs drawing, rendering, and synthesis on a layer, and transmits synthesized image data to a display driver integrated circuit through an MIPI. The display driver integrated circuit stores the image data in a buffer (buffer), scans the image data in the buffer, and restores the digital image data into continuous voltage signals to drive a panel, to implement image display and refresh.

In a related technology, when a terminal device with an ARM architecture performs refresh rate change, before refresh rate change, an SoC delivers a specific change instruction to a display driver integrated circuit through an MIPI, to notify the display driver integrated circuit that a refresh rate changes. In response to the change instruction, the display driver integrated circuit actively changes a frequency of a TE signal, and changes a periodicity of the TE signal, to implement refresh rate change. However, the SoC of the terminal device with the ARM architecture can deliver the change instruction to the display driver integrated circuit only in an image transmission slot, and the display driver integrated circuit needs to respond in time and complete refresh rate change before a next frame of image is displayed through refresh. In other words, the terminal device with the ARM architecture performs refresh rate change when delivering the change instruction. Therefore, a timing requirement is high.

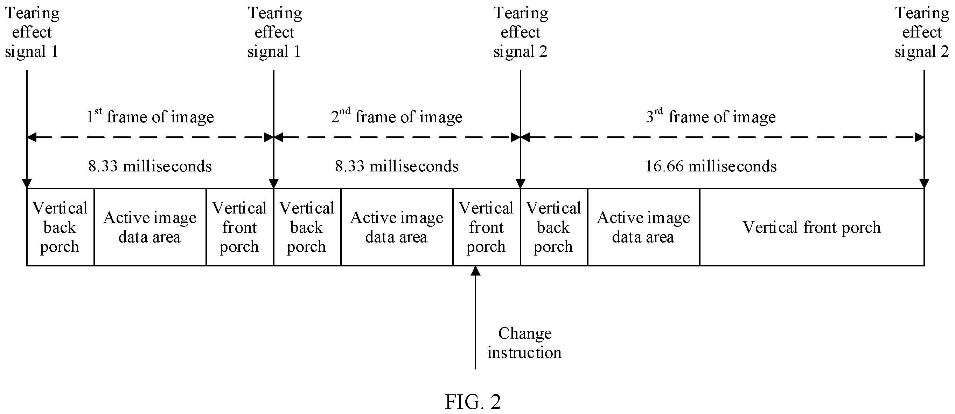

Specifically, FIG. 2 is a diagram of timing of refresh rate change. A frame of image may be divided into three areas: a vertical back porch (vertical back porch, VBP), which may also be described as a vertical back porch area; an active image data area (active, ACT); and a vertical front porch (vertical front porch, VFP), which may also be described as a vertical front porch area. The ACT is used to output a frame of image data. The VBP and the VFP are transmission slots and include no active image data. The VBP and the VFP are not used to transmit image data, but are used to match a rate of image display on a screen with a rate of image drawing by an SoC.

As shown in FIG. 2, refresh rates of a 1^{st} frame of image and a 2^{nd} frame of image are 120 Hz, and a TE signal corresponding to the 1^{st} frame of image and the 2^{nd} frame of image are TE1. A periodicity of TE1 corresponding to 120 Hz is 8.33 milliseconds (milliseconds, ms).

In some examples, after transmission of the 2^{nd} frame of image ends, the refresh rate is changed, and a VFP of the 2^{nd} frame of image receives a change instruction delivered by the SoC (for example, the change instruction indicates to change the refresh rate from 120 Hz to 60 Hz). A display driver integrated circuit changes the TE signal (for example, changes TE1 to TE2) in response to the change instruction, and adjusts a periodicity of the TE signal. For example, a periodicity of TE1 corresponding to 60 Hz is 16.66 ms. Each subsequent frame of image (for example, a 3^{rd} frame of image) is transmitted and displayed based on an adjusted TE signal (for example, TE2).

It may be understood that, when the TE signal changes, the periodicity corresponding to the TE signal also changes. A graphics processing unit of the SoC in a terminal device draws and transmits an image based on a changed periodicity, and the display driver integrated circuit in the terminal device refreshes to display the image based on the changed periodicity.

It may be understood that, currently, when the terminal device performs refresh rate change, an image data drawing and transmission periodicity changes, and a drawing and transmission periodicity of the terminal device at a low refresh rate is longer than that of the terminal device at a high refresh rate.

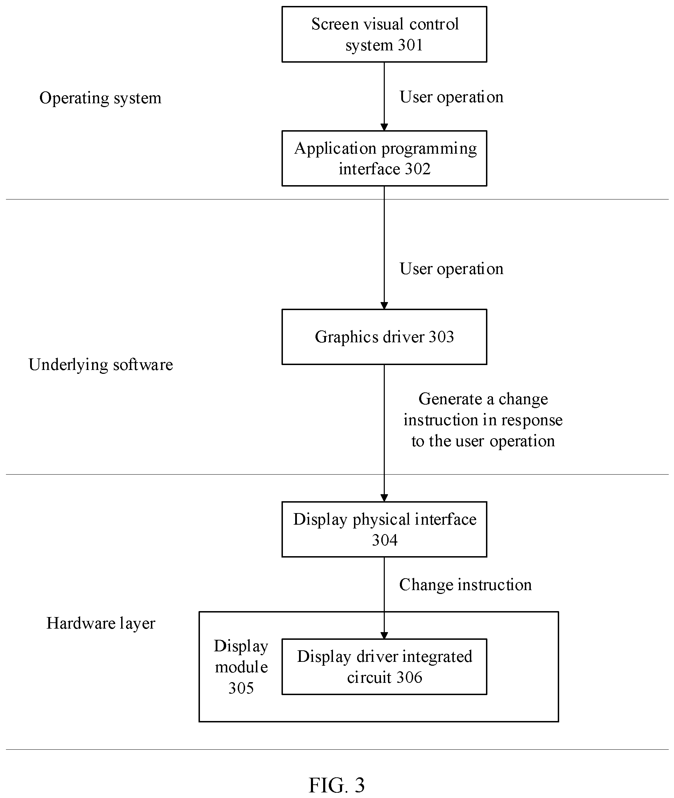

FIG. 3 is a diagram of an architecture of refresh rate change by a terminal device in a related technology.

A display application setting (on-screen display, OSD) (which may also be described as a screen visual control system) 301 in an operating system of the terminal device detects a user operation of changing a refresh rate, and sends the user operation to a graphics driver (graphics driver) 303 in underlying software through an application programming interface (application programming interface, API) 302. The graphics driver generates a change instruction in response to the user operation, and sends the change instruction to a display driver integrated circuit 306 in a display module 305 through a display physical interface (display serial interface-physical, DSI PHY) 304, so that the display driver integrated circuit 306 completes refresh rate change.

The screen visual control system 301 and the application programming interface 302 run on the operating system, the graphics driver 303 runs on the underlying software, and the display physical interface 304 and the display module 305 run on a hardware layer.

In a related technology, a terminal device with an X86 architecture uses an MIPI display interface to complete an image drawing process and a transmission rate change process. However, development of MIPI functions in the X86 architecture is less mature, and some functions cannot be implemented. For example, when the terminal device with the X86 architecture performs refresh rate change through an MIPI, delivering of a specific change instruction is reduced. Therefore, a display driver integrated circuit of the terminal device with the X86 architecture cannot receive the change instruction, and cannot adjust a TE signal according to the change instruction. As a result, a frame rate of image generation in a system of the terminal device does not match a refresh rate of image refresh on a screen of the terminal device, and problems such as timing asynchronization and screen tearing occur.

To resolve the problems existing in the existing related technology, embodiments of this application provide a refresh rate change method. In the method, a terminal device determines a target refresh rate in response to a preset operation; changes a level to a level corresponding to the target refresh rate based on the target refresh rate; changes a current refresh rate of the terminal device to the target refresh rate in response to a changed level; adjusts a tearing effect signal based on the changed target refresh rate; and changes a frame rate based on an adjusted tearing effect signal. Refresh rate change and frame rate change are implemented by changing the level, and refresh rate change is implemented without depending on an interface function such as a change instruction. This optimizes a refresh rate change manner.

In embodiments of this application, a CPU architecture of the terminal device may be an X86 architecture, or may be an ARM architecture. It should be understood that, with development of technologies, the CPU architecture of the terminal device may also be another type of architecture.

The refresh rate change method provided in embodiments of this application may be applied to a terminal device having a display function. The terminal device may also be referred to as a terminal (terminal), user equipment (user equipment, UE), a mobile station (mobile station, MS), a mobile terminal (mobile terminal, MT), or the like.

In embodiments of this application, the terminal device may be a mobile phone (mobile phone), a computer, a two-in-one notebook computer, a two-in-one tablet computer, a notebook computer, a smart television, a tablet computer (Pad), a computer with a wireless transceiver function, an augmented reality (augmented reality, AR) terminal device/virtual reality (virtual reality, VR) device, an ultra-mobile personal computer (ultra-mobile personal computer, UMPC), a netbook, a personal digital assistant (personal digital assistant, PDA), an artificial intelligence (artificial intelligence, AI) terminal, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. A specific technology and a specific device form that are used by the terminal device are not limited in embodiments of this application.

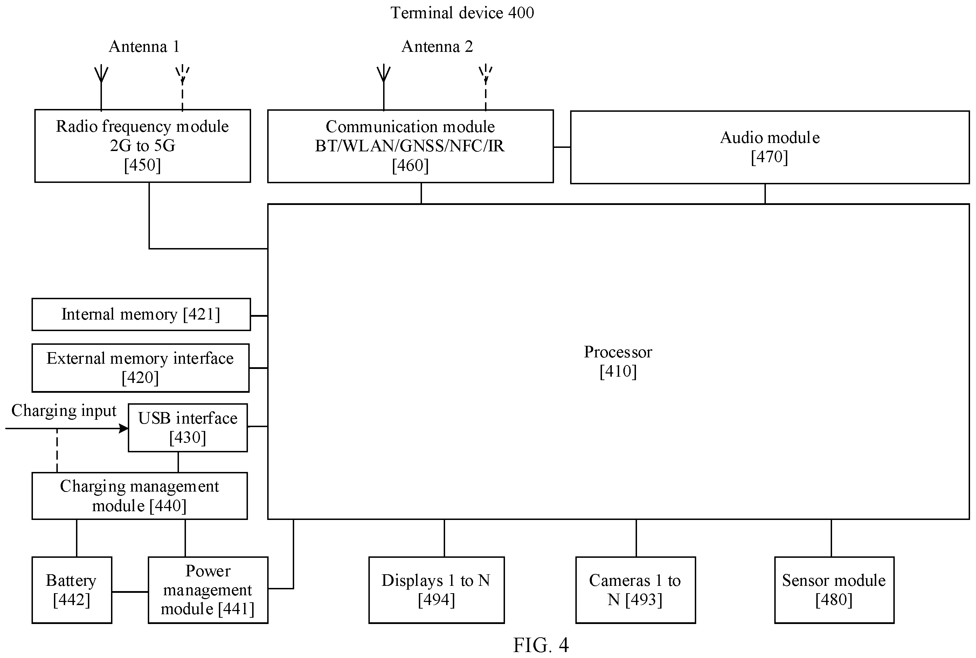

FIG. 4 is a diagram of a hardware structure of a terminal device 400.

The terminal device 400 may include a processor 410, an external memory interface 420, an internal memory 421, a universal serial bus (universal serial bus, USB) interface 430, a charging management module 440, a power management module 441, a battery 442, an antenna 1, an antenna 2, a radio frequency module 450, a communication module 460, an audio module 470, a sensor module 480, a camera 493, a display 494, and the like.

The structure shown in embodiments of the present invention does not constitute a limitation on the terminal device 400. The terminal device 400 may include more or fewer components than those shown in the figure, some components may be combined, or some components may be split, or different component arrangements may be used. The components shown in the figure may be implemented by using hardware, software, or a combination of software and hardware.

The processor 410 may include one or more processing units. For example, the processor 410 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on an instruction operation code and a timing signal, to complete control of instruction fetching and instruction execution.

A memory may be further disposed in the processor 410, and is configured to store instructions and data. In some embodiments, the memory in the processor is a cache, and may store an instruction or data that has just been used or is cyclically used by the processor. If the processor needs to use the instruction or the data again, the processor may directly invoke the instruction or the data from the memory. This avoids repeated access, reduces waiting time of the processor, and improves system efficiency.

In some embodiments, the processor 410 may include one or more interfaces. The interface may include an inter-integrated circuit (inter-integrated circuit, I2C) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The MIPI interface may be configured to connect the processor 410 to a peripheral component such as the display 494 or the camera 493. The MIPI interface includes a camera serial interface (camera serial interface, CSI), a display serial interface (display serial interface, DSI), and the like. In some embodiments, the processor 410 communicates with the camera 493 through the CSI, to implement a photographing function of the terminal device 400. The processor 410 communicates with the display 494 through the DSI, to implement a display function of the terminal device 400.

The external memory interface 420 may be configured to connect to an external storage card, for example, a micro SD card, to extend a storage capability of the terminal device 400. The external storage card communicates with the processor through the external memory interface, to implement a data storage function. For example, files such as music and a video are stored in the external storage card.

The internal memory 421 may be configured to store computer-executable program code. The executable program code includes instructions. The processor 410 runs the instructions stored in the internal memory 421, to perform various function application and data processing of the terminal device 400. The memory 421 may include a program storage area and a data storage area. The program storage area may store an operating system, an application required by at least one function, and the like. The data storage area may store data created during use of the terminal device 400, and the like. In addition, the memory 421 may include a high-speed random access memory; and may further include a non-volatile memory, for example, at least one magnetic disk storage component, a flash memory component, another volatile solid-state storage component, or a universal flash storage (universal flash storage, UFS).

The USB interface 430 0 is an interface that complies with a USB standard specification, and may be specifically a mini USB interface, a micro USB interface, a USB type C interface, or the like. The USB interface may be configured to connect to a charger to charge the terminal device 400, may be configured to transmit data between the terminal device 400 and a peripheral device, and may be configured to connect to a headset to play audio through the headset. The interface may be further configured to connect to another terminal device, for example, an AR device.

It may be understood that an interface connection relationship between the modules shown in embodiments of this application is merely an example for description, and does not constitute a limitation on the structure of the terminal device 100. In some other embodiments of this application, the terminal device 400 may alternatively use an interface connection manner different from that in this embodiment, or use a combination of a plurality of interface connection manners.

The charging management module 440 is configured to receive a charging input from a charger. The charger may be a wireless charger or a wired charger. In some embodiments of wired charging, the charging management module 440 may receive a charging input of the wired charger through the USB interface 430. In some embodiments of wireless charging, the charging management module 440 may receive a wireless charging input through a wireless charging coil of the terminal device 400. When charging the battery 442, the charging management module 440 may further supply power to the terminal device through the power management module 441.

The power management module 441 is configured to connect to the battery 442, the charging management module 440, and the processor 410. The power management module receives an input of the battery and/or the charging management module, and supplies power to the processor, the internal memory, an external memory, the display, and the like. The power management module may be further configured to monitor parameters such as a battery capacity and a battery status of health (electric leakage and impedance). In some other embodiments, the power management module 441 may alternatively be disposed in the processor 410. In some other embodiments, the power management module 441 and the charging management module 440 may alternatively be disposed in a same component.

A wireless communication function of the terminal device 400 may be implemented through the antenna 1, the antenna 2, the radio frequency module 450, the communication module 460, the modem processor, the baseband processor, and the like.

The antenna 1 and the antenna 2 are configured to transmit and receive electromagnetic wave signals. Each antenna in the terminal device 400 may be configured to cover one or more communication frequency bands. Different antennas may be further multiplexed, to improve antenna utilization. For example, a cellular network antenna may be multiplexed as a diversity antenna of a wireless local area network. In some embodiments, the antenna may be used in combination with a tuning switch.

The radio frequency module 450 may provide a communication processing module that is used in the terminal device 400 and that is for a solution of wireless communication including 2G to 5G. The radio frequency module 450 may include at least one filter, a switch, a power amplifier, a low noise amplifier (low noise amplifier, LNA), and the like. The radio frequency module 450 may receive an electromagnetic wave through the antenna 1, perform processing such as filtering and amplification on the received electromagnetic wave, and transmit the electromagnetic wave to the modem processor for demodulation. The radio frequency module 450 may further amplify a signal obtained through modulation by the modem processor, and the amplified signal is converted into an electromagnetic wave through the antenna 1 for radiation. In some embodiments, at least some functional modules of the radio frequency module 450 may be disposed in the processor 410. In some embodiments, at least some functional modules of the radio frequency module 450 may be disposed in a same component as at least some modules of the processor 410.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The baseband processor processes the low-frequency baseband signal, and then transfers an obtained signal to the application processor. The application processor displays an image or a video through the display 494. In some embodiments, the modem processor may be an independent component. In some other embodiments, the modem processor may be independent of the processor 410, and is disposed in a same component as the radio frequency module 450 or another functional module.

The communication module 460 may provide a communication processing module that is used in the terminal device 400 and that is for a solution of wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field wireless communication technology (near field communication, NFC), an infrared (infrared, IR) technology, and the like. The communication module 460 may be one or more components integrating at least one communication processing module. The communication module receives an electromagnetic wave through the antenna 2, performs frequency modulation and filtering processing on an electromagnetic wave signal, and sends a processed signal to the processor. The communication module 460 may further receive a to-be-sent signal from the processor 410, perform frequency modulation and amplification on the signal, and convert the signal into an electromagnetic wave through the antenna 2 for radiation.

In some embodiments, the antenna 1 of the terminal device 400 is coupled to the radio frequency module, and the antenna 2 is coupled to the communication module, so that the terminal device 400 may communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, an IR technology, and/or the like. The GNSS may include a global positioning system (global positioning system, GPS), a global navigation satellite system (global navigation satellite system, GLONASS) and/or a BeiDou navigation satellite system (BeiDou navigation satellite system, BDS), a quasi-zenith satellite system (quasi-zenith satellite system, QZSS) and/or a satellite based augmentation system (satellite based augmentation system, SBAS), and the like.

The audio module 470 is configured to convert digital audio information into an analog audio signal output, and is further configured to convert an analog audio input into a digital audio signal. The audio module may be further configured to encode and decode audio signals.

The sensor module 480 of the terminal device 400 may specifically include a pressure sensor, a distance sensor, an ambient light sensor, a fingerprint sensor, a temperature sensor, a touch sensor, and the like. The touch sensor is also referred to as a "touch panel", may be disposed on the display, and is configured to detect a touch operation performed on or near the touch sensor.

The camera 493 is configured to capture a static image or a video. An optical image of an object is generated through a lens, and is projected onto a photosensitive element. The photosensitive element may be a charge coupled device (charge coupled device, CCD) or a complementary metal-oxide-semiconductor (complementary metal-oxide-semiconductor, CMOS) phototransistor. In some embodiments, the terminal device 400 may include one or N cameras, where N is a positive integer greater than 1.

The terminal device 400 implements a display function through the graphics processing unit (graphics processing unit, GPU), the display 494, the application processor, and the like. The GPU is a microprocessor for image processing, and is connected to the display 494 and the application processor. The GPU is configured to: perform mathematical and geometric calculation, and render an image. The processor 410 may include one or more GPUs that execute program instructions to generate or change display information.

The display 494 is configured to display an image, a video, and the like. The display includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diode, QLED), or the like. In some embodiments, the terminal device 400 may include one or N displays, where N is a positive integer greater than 1. In embodiments of this application, the display 494 is configured to display images at different refresh rates.

The terminal device 400 may further include components such as the battery 442. This is not limited in this embodiment of this application.

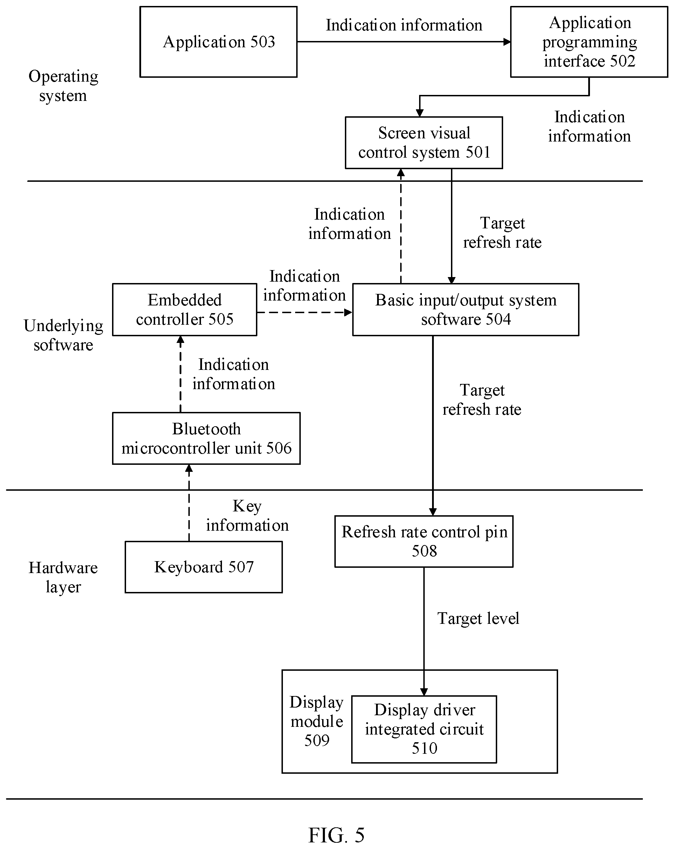

For ease of understanding, the following describes, with reference to FIG. 5, an interaction process between modules in the refresh rate change method provided in embodiments of this application.

As shown in FIG. 5, a system of the terminal device may include an on-screen menu adjustment manner (on-screen display, OSD) (which may also be described as a screen visual control system) 501, an application programming interface (application programming interface, API) 502, an application 503, basic input/output system (basic input/output system, BIOS) software 504, an embedded controller (embedded controller, EC) 505, a Bluetooth microcontroller unit (Bluetooth microcontroller Unit, BTMCU) 506, a keyboard 507, a refresh rate control (Frame Rate Control, FRC) pin 508, and a display module 509.

The screen visual control system 501, the application programming interface 502, and the application 503 run on an operating system; the basic input/output system software 504, the embedded controller 505, and the Bluetooth microcontroller unit 506 run on underlying software; and the keyboard 507, the refresh rate control pin 508, and the display module 509 run on a hardware layer.

The display module 509 includes a display driver integrated circuit (display driver integrated circuit, DDIC) 510.

Specifically, the screen visual control system 501 determines the target refresh rate in response to the preset operation.

In a possible implementation, the application 503 detects the preset operation, determines indication information corresponding to the preset operation, and sends the indication information corresponding to the preset operation to the screen visual control system 501 through the application programming interface 502. The screen visual control system 501 determines the target refresh rate in response to the indication information corresponding to the preset operation.

In another possible implementation, the Bluetooth microcontroller unit 506 detects an operation of a user on the keyboard 507 (for example, the Bluetooth microcontroller unit 506 receives key information uploaded by the keyboard 507). When detecting that the user triggers the preset operation (for example, determining, if the key information uploaded by the keyboard 507 matches preset key information of the preset operation, that the user triggers the preset operation), the Bluetooth microcontroller unit determines indication information corresponding to the preset operation, and sends the indication information corresponding to the preset operation to the basic input/output system software 504 through the embedded controller 505. Then, the basic input/output system software 504 uploads the indication information corresponding to the preset operation to the screen visual control system 501. The screen visual control system 501 determines the target refresh rate in response to the indication information corresponding to the preset operation.

After determining the target refresh rate in response to the preset operation, the screen visual control system 501 controls, based on the target refresh rate through the input/output system software 504, the refresh rate control pin 508 to change the current level to the target level corresponding to the target refresh rate. The refresh rate control pin 508 transmits a changed target level to the display driver integrated circuit 510 in the display module 509.

It may be understood that the terminal device in embodiments of this application stores a preset correspondence between a refresh rate and a level. After detecting a refresh rate change, the terminal device changes the level of the refresh rate control pin 508 based on the preset correspondence between a refresh rate and a level, so that the display driver integrated circuit 510 detects a level change, and implements refresh rate change based on a changed level.

It may be understood that the refresh rate control pin 508 is a pin, in a general-purpose input/output (general-purpose input/output, GPIO) port of the terminal device, pre-configured to indicate a refresh rate change.

The display driver integrated circuit 510 adjusts a register value of a register in the display driver integrated circuit 510 based on the target level, and changes the refresh rate of the terminal device to the target refresh rate based on an adjusted register value. For a specific implementation in which the display driver integrated circuit 510 changes the refresh rate based on the level change, refer to the following descriptions.

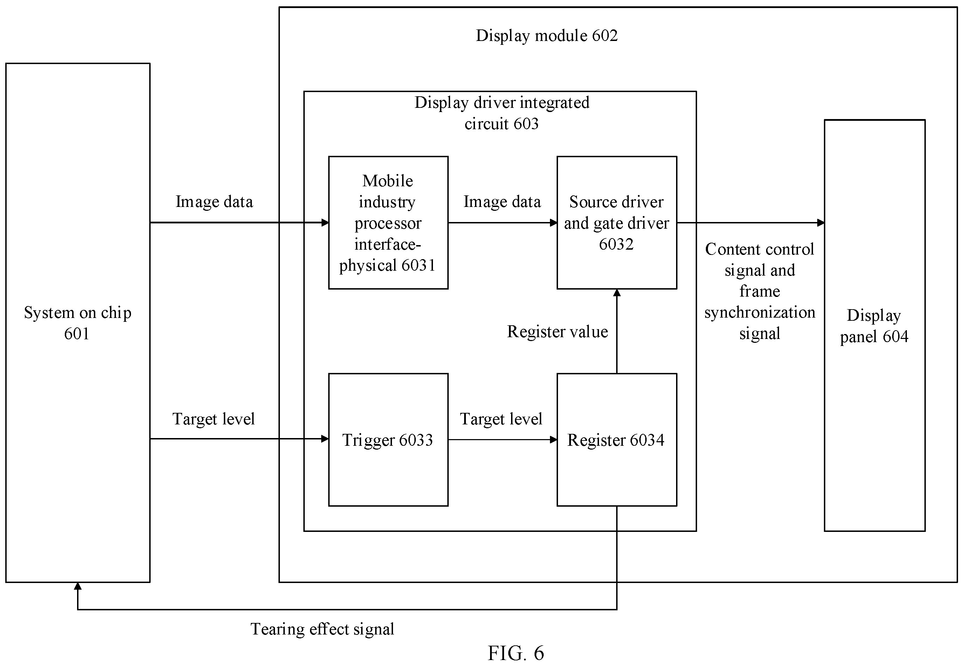

FIG. 6 shows a refresh rate change system according to an embodiment of this application. The refresh rate change system includes a system on chip (system on chip, SoC) 601 and a display module 602.

The display module 602 includes a display driver integrated circuit 603 and a display panel 604.

The display driver integrated circuit 603 includes a mobile industry processor interface-physical (mobile industry processor interface-physical, MIPI PHY) 6031, a source driver and a gate driver 6032, a trigger (trigger) 6033, and a register (register) 6034.

It may be understood that the system on chip 601 includes software running in the system on chip 601 and hardware outside the system on chip.

Based on the example in FIG. 5, the system on chip 601 includes the screen visual control system 501, the application programming interface 502, and the application 503 that run on the operating system, the basic input/output system software 504, the embedded controller 505, and the Bluetooth microcontroller unit 506 that run on the underlying software, and the refresh rate control pin 508 that runs at the hardware layer in FIG. 5.

Specifically, the system on chip 601 is in communication connection to the mobile industry processor interface-physical 6031 through a mobile industry processor interface (mobile industry processor interface, MIPI).

For example, the system on chip 601 is in communication connection to the mobile industry processor interface-physical 6031 through a physical link MIPI DSI [0:3].

The system on chip 601 performs drawing, rendering, and synthesis on a layer, and transmits synthesized image data to the mobile industry processor interface-physical 6031 in the display driver integrated circuit 603 through an MIPI.

The system on chip 601 is in communication connection to the display driver integrated circuit 603 through a general-purpose input/output (general-purpose input/output, GPIO) port (not shown in FIG. 6).

The general-purpose input/output port of the system on chip 601 includes the refresh rate control pin 508 (not shown in FIG. 6) shown in FIG. 5. The general-purpose input/output port of the display driver integrated circuit 603 includes an input pin (not shown in FIG. 6). Specifically, the refresh rate control pin 508 of the system on chip 601 is in communication connection to the input pin of the display driver integrated circuit 603.

The system on chip 601 detects a preset operation, determines a target refresh rate indicated by the preset operation, and changes, based on the target refresh rate, a current level of the refresh rate control pin 508 (not shown in FIG. 6) of the system on chip 601 to a target level corresponding to the target refresh rate.

Specifically, with reference to the modules in FIG. 5, the screen visual control system 501 in the system on chip 601 detects the preset operation, and determines the target refresh rate in response to the preset operation. For a specific implementation in which the screen visual control system 501 detects the preset operation and determines the target refresh rate, refer to the foregoing descriptions. Details are not described herein again. The system on chip 601 controls, based on the target refresh rate through the input/output system software 504, the refresh rate control pin 508 of the system on chip 601 to change the current level to the target level corresponding to the target refresh rate. (FIG. 6 does not show a specific implementation process of each module in the system on chip 601.)

The input pin of the display driver integrated circuit 603 correspondingly changes a level of the input pin to the target level in response to the level change of the refresh rate control pin of the system on chip 601.

Specifically, with reference to the modules in FIG. 5, the refresh rate control pin 508 of the system on chip 601 transmits a changed target level to the input pin (not shown in FIG. 6) of the display driver integrated circuit 603.

It may be understood that the refresh rate control pin 508 of the system on chip 601 is in communication connection to the input pin of the display driver integrated circuit 603. The refresh rate control pin 508 is an output end, and the input pin is a receive end. For example, the system on chip 601 detects the preset operation, and changes the level of the refresh rate control pin 508 from 0 V to 1.8 V based on the target refresh rate indicated by the preset operation. The refresh rate control pin 508 outputs a 1.8 V voltage to the input pin of the display driver integrated circuit 603. Correspondingly, the level of the input pin of the display driver integrated circuit 603 increases to 1.8 V. The trigger 6033 of the display driver integrated circuit 603 detects that the level of the input pin changes to 1.8 V, and triggers, based on the changed level 1.8 V, the register 6034 in the display driver integrated circuit 603 to rewrite a register value. The display driver integrated circuit performs a refresh rate change operation based on a rewritten register value.

In this way, after detecting the preset operation, the system on chip 601 changes the level of the refresh rate control pin 508, so that the input pin of the display driver integrated circuit 603 obtains the changed level, and the display driver integrated circuit 603 completes refresh rate change in response to the changed level.

The mobile industry processor interface-physical 6031 receives the image data sent by the system on chip 601, and sends the image data to the source driver and the gate driver 6032.

The trigger 6033 is connected to the input pin of the display driver integrated circuit 603, obtains the target level from the input pin, and sends the target level to the register 6034 in the display driver integrated circuit 603, so that a chip logic circuit in the register 6034 rewrites the register value based on the target level.

The register 6034 receives the target level sent by the trigger 6033, and adjusts the register value based on the target level.

It may be understood that the register 6034 includes different working modes of the display driver integrated circuit 603, and each register value corresponds to one working mode. The register 6034 is preset with various settings, for example, a correspondence between a register value and a working mode, and a correspondence between a register value and information included in the working mode. The information included in the working mode includes a level, a tearing effect signal, a circuit, a refresh rate, and the like. In other words, the register 6034 includes a mapping relationship between a register value and a level, a mapping relationship between a register value and a tearing effect signal, and the like.

After obtaining an adjusted register value, the register 6034 sends the register value to the source driver and the gate driver 6032, so that the source driver and the gate driver 6032 adjust a refresh rate based on the register value.

The register 6034 is further configured to: adjust, based on the adjusted register value, a tearing effect signal (TE signal) used for synchronization, and send an adjusted tearing effect signal to the system on chip 601, so that the system on chip 601 changes a frame rate based on the adjusted tearing effect signal. In other words, the system on chip 601 performs drawing, rendering, and synthesis on a layer based on the adjusted tearing effect signal, to generate new image data.

The source driver and the gate driver 6032 receive the image data sent by the mobile industry processor interface-physical 6031, convert the image data into analog image data (which may also be described as a content control signal or an analog signal), and send the content control signal to the display panel 604.

It may be understood that the image data received by the source driver and the gate driver 6032 from the mobile industry processor interface-physical 6031 is digital information, and the digital information needs to be converted into continuous analog information (for example, an electrical signal), so that the display panel correspondingly displays an image based on the analog information.

The source driver and the gate driver 6032 receive the adjusted register value sent by the register 6034; correspondingly adjust the refresh rate of the terminal device based on the adjusted register value and a related setting corresponding to the register value, to change the refresh rate of the terminal device to the target refresh rate; and send a frame synchronization signal to the display panel 604 based on the target refresh rate, so that the display panel 604 refreshes to display the image based on the frame synchronization signal, thereby implementing refresh rate change of the display panel 604.

The display panel 604 refreshes to display image content based on the content control signal and the frame synchronization signal that are sent by the source driver and the gate driver 6032.

The following describes in detail the refresh rate change method in embodiments of this application by using specific embodiments. The following embodiments may be combined with each other, and same or similar concepts or processes may not be repeatedly described in some embodiments.

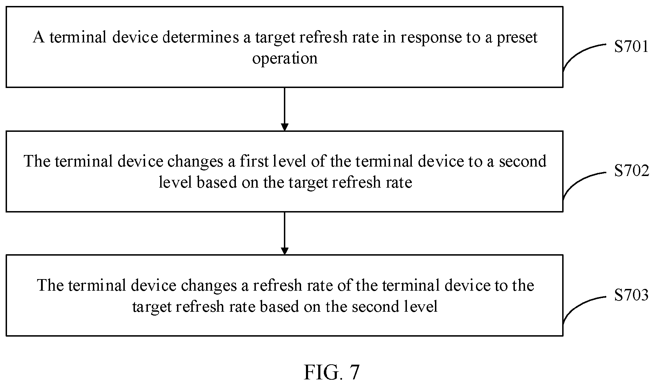

FIG. 7 is a schematic flowchart of a refresh rate change method according to an embodiment of this application. The method includes the following steps S701 to S703.

S701: A terminal device determines a target refresh rate in response to a preset operation.

The preset operation includes a preset operation that can trigger the terminal device to change a refresh rate.

Optionally, the preset operation may be a specific shortcut operation of a user, for example, a shortcut operation in a manner of a gesture, touch control, a key combination shortcut, or the like. The preset operation may alternatively be a voice command of the user. The preset operation may alternatively be in a specific implementation form of the preset operation that is not limited in this embodiment of this application.

The target refresh rate is a refresh rate that should be implemented after the user indicates, by using the preset operation, the terminal device to complete refresh rate change.

In some embodiments of this application, the terminal device receives the preset operation triggered by the user, and determines the target refresh rate in response to the preset operation.

In a possible implementation, the terminal device receives a shortcut operation input by the user, and determines the target refresh rate in response to the shortcut operation.

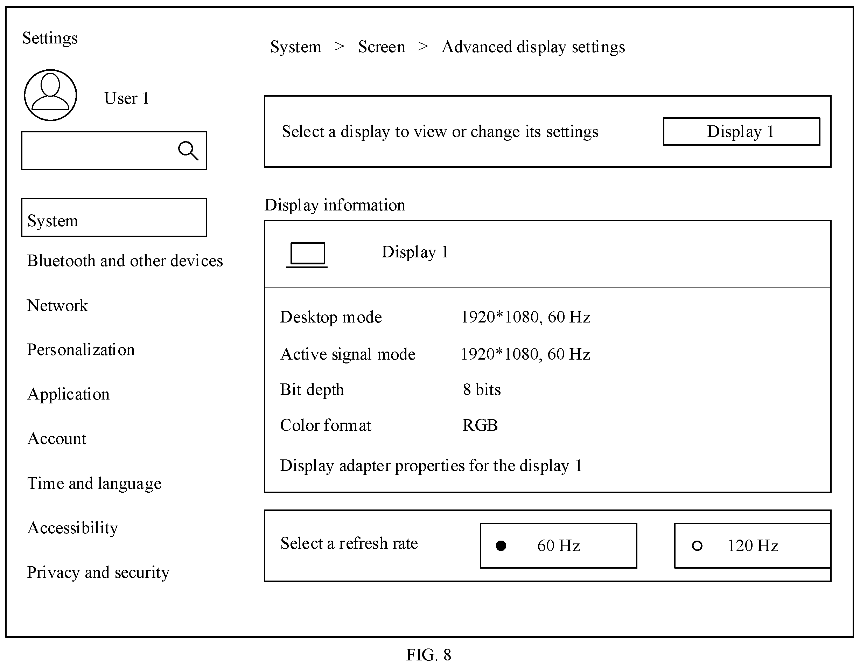

In some examples, a setting interface of the terminal device includes a refresh rate control used for refresh rate change. A plurality of refresh rate controls respectively corresponding to different refresh rates, for example, two refresh rate controls respectively corresponding to 60 Hz and 120 Hz shown in FIG. 8, may be configured on the setting interface. It should be understood that the terminal device may implement a plurality of refresh rates. A quantity of refresh rates and values of the refresh rates shown in FIG. 8 are merely examples for description.

As shown in FIG. 8, a current refresh rate of the terminal device is 60 Hz. The terminal device receives an operation of the user clicking on a refresh rate control corresponding to 120 Hz; and determines, in response to the operation, that the target refresh rate is 120 Hz. Subsequently, the terminal device changes the refresh rate of the terminal device based on the target refresh rate 120 Hz. For example, the terminal device changes the refresh rate from 60 Hz to 120 Hz according to the following step S702 and step S703.

Alternatively, one control used for refresh rate change may be configured on the setting interface, and the terminal device may determine a corresponding refresh rate based on accumulated operations performed by the user on the refresh rate control. For example, refresh rates of the terminal device are 60 Hz and 120 Hz, and a current refresh rate is 60 Hz. The terminal device detects an operation of the user clicking on the refresh rate control, and determines that the user indicates to change the refresh rate to 120 Hz, that is, the target refresh rate is 120 Hz. Then, the terminal device further detects an operation of the user clicking on the refresh rate control, and determines that the user indicates to change the refresh rate to 60 Hz, that is, the target refresh rate is 60 Hz.

In some other examples, a key or a combination shortcut used to change the refresh rate of the terminal device is preset on the terminal device or a keyboard connected to the terminal device. For example, a combination shortcut that is on the keyboard and that is used to change the refresh rate of the terminal device is preset as a combination of two keys: an Fn key and an R key. An example in which the terminal device includes two refresh rates: 60 Hz and 120 Hz, and a current refresh rate of the terminal device is 60 Hz is still used. The terminal device receives an operation of the user simultaneously pressing the Fn key and the R key on the keyboard, and determines that the refresh rate needs to be changed. Because the terminal device includes only two refresh rates, the terminal device determines, in response to the operation, that the current refresh rate (that is, 60 Hz) of a screen of the terminal device needs to be changed to the other refresh rate (that is, 120 Hz). In this way, it is determined that the target refresh rate is 120 Hz.

In still some other examples, the terminal device presets a key combination of an Fn key and an R key. The terminal device includes a plurality of refresh rates. The terminal device receives an operation of the user simultaneously pressing the Fn key and the R key on a keyboard, and displays a plurality of refresh rate options on a display interface in response to the operation. The terminal device receives an operation of the user clicking on a refresh rate option, and determines the refresh rate clicked by the user as the target refresh rate.

Optionally, the terminal device may receive, in a wired connection manner, a shortcut operation of the user triggering a combination shortcut of the Fn key and the R key.

For example, the terminal device is connected to a keyboard through a data cable, and the terminal device directly receives a shortcut operation of the user simultaneously pressing the combination shortcut of the Fn key and the R key on the keyboard.

Optionally, the terminal device may alternatively receive, in a wireless connection manner, the shortcut operation of the user triggering the combination shortcut of the Fn key and the R key.

For example, the terminal device is connected to a wireless keyboard over Bluetooth, and the terminal device receives, over Bluetooth, a shortcut operation of the user pressing the combination shortcut of the Fn key and the R key on the wireless keyboard.

In another possible implementation, the terminal device receives a voice command input by the user, and determines the target refresh rate in response to the voice command. For example, the terminal device detects a voice command "change the refresh rate to 120 Hz" of the user, and may determine that the target refresh rate is 120 Hz.

In some examples, the terminal device receives, through a voice assistant, a refresh rate change command input by the user, and the terminal device interacts with the user in response to the refresh rate change command, to determine the target refresh rate.

With reference to the modules of the terminal device shown in FIG. 5, the following describes a specific implementation in which the terminal device determines the target refresh rate in response to the preset operation in S701.

In some embodiments of this application, an application of the terminal device receives the preset operation triggered by the user, determines indication information (for example, an operation manner, an operation object, and operation content) corresponding to the preset operation, and then sends the indication information corresponding to the preset operation to a screen visual control system through an application programming interface. The screen visual control system determines the target refresh rate based on the indication information corresponding to the preset operation (for example, the operation content includes the target refresh rate, and the screen visual control system directly determines the target refresh rate based on the indication information). Then, the screen visual control system sends the target refresh rate to a refresh rate control pin through a basic input/output system, to trigger refresh rate change.

In some other embodiments of this application, a Bluetooth microcontroller unit in the terminal device detects an operation of the user on the keyboard; and when detecting that the user triggers the preset operation, determines indication information corresponding to the preset operation. The Bluetooth microcontroller unit sends the indication information corresponding to the preset operation to a basic input/output system through an embedded controller, and then the basic input/output system uploads the indication information corresponding to the preset operation to a screen visual control system. The screen visual control system determines the target refresh rate in response to the indication information corresponding to the preset operation. Then, the screen visual control system sends the target refresh rate to a refresh rate control pin through the basic input/output system, to trigger refresh rate change.

It may be understood that a quantity of refresh rates and values of the refresh rates in the terminal device are not limited in this embodiment of this application. An example in which the terminal device includes two refresh rates is used below for description.

S702: The terminal device changes a first level of the terminal device to a second level based on the target refresh rate.

A level is a voltage value corresponding to a preset refresh rate. The terminal device changes to different refresh rates based on different levels.

The terminal device detects the preset operation when running at the first level. In other words, before the terminal device changes to the target refresh rate, a refresh rate of the terminal device corresponds to the first level.

The second level is a level corresponding to the target refresh rate.

In some embodiments of this application, the terminal device presets and stores a correspondence between a refresh rate and a level.

In some embodiments of this application, a plurality of refresh rates are represented by different values of one level.

In some examples, Table 1 is a table of a relationship between a refresh rate and a level that is preset by the terminal device in this embodiment of this application.

**Table 1**

| Refresh rate | Level |
|---|---|
| 60 Hz | 1.8 V |
| 120 Hz | 0 V |

As shown in Table 1, the terminal device includes two refresh rates: 60 Hz and 120 Hz. A level corresponding to 60 Hz is 1.8 V, and a level corresponding to 120 Hz is 0 V.

It may be understood that the foregoing descriptions are provided by using an example in which the terminal device includes two refresh rates. During actual application, the terminal device may include a plurality of refresh rates, and each refresh rate has a corresponding level.

In some other embodiments of this application, a plurality of refresh rates may alternatively be represented by a plurality of levels.

In some other examples, an example in which the terminal device includes only two levels: a 1.8 V high level and a 0 V low level is used for description. In this case, refresh rates are determined based on different combinations of the high and low levels.

Table 2 is a table of a relationship between a refresh rate and levels that is preset by the terminal device in this embodiment of this application.

**Table 2**

| Refresh rate | Levels |
|---|---|
| Refresh rate 1 | 0 V, 0 V |
| Refresh rate 2 | 0 V, 1.8 V |
| Refresh rate 3 | 1.8 V, 0 V |
| Refresh rate 4 | 1.8 V, 1.8 V |

As shown in Table 2, different refresh rates are distinguished by using two levels. The terminal device includes four refresh rates: the refresh rate 1, the refresh rate 2, the refresh rate 3, and the refresh rate 4. Each refresh rate corresponds to a different level combination. When the two levels are both 0 V, a corresponding refresh rate is the refresh rate 1. When a 1^{st} level in the two levels is 0 V and a 2^{nd} level is 1.8 V, a corresponding refresh rate is the refresh rate 2. When the 1^{st} level in the two levels is 1.8 V and the 2^{nd} level is 0 V, a corresponding refresh rate is the refresh rate 3. When the two levels are both 1.8 V, a corresponding refresh rate is the refresh rate 4.

It may be understood that a correspondence between a refresh rate and a level is not limited in this embodiment of this application, and a quantity of levels is not limited.

In some embodiments of this application, the terminal device determines, based on a preset correspondence, the second level corresponding to the target refresh rate.

Based on the foregoing example of S701, when the terminal device receives the preset operation, the current refresh rate of the terminal device is 60 Hz. It is determined, based on the correspondence between a refresh rate and a level, that a current level of the terminal device is 1.8 V. That is, the first level is 1.8 V. The terminal device determines, based on the preset operation, that the target refresh rate is 120 Hz; and determines, based on the correspondence between a refresh rate and a level, that the second level is 0 V. Then, the terminal device changes the level from the first level (1.8 V) to the second level (0 V).

With reference to the modules of the terminal device shown in FIG. 5 and FIG. 6, the following describes a specific implementation in which the terminal device changes the first level to the second level based on the target refresh rate in S702.

In some embodiments of this application, the terminal device prestores the correspondence between a refresh rate and a level. After determining the target refresh rate in response to the preset operation, the screen visual control system in the terminal device controls, based on the target refresh rate through the input/output system software, the refresh rate control pin to change the current first level to the second level corresponding to the target refresh rate.

An input pin of a display driver integrated circuit in the terminal device changes a level of the input pin to the second level in response to a level change of the refresh rate control pin.

S703: The terminal device changes the refresh rate of the terminal device to the target refresh rate based on the second level.

In some embodiments of this application, the terminal device rewrites a register value based on the second level, and changes the refresh rate of the terminal device to the target refresh rate based on a rewritten register value.

It may be understood that a register stores various preset settings, for example, a correspondence between a register value and a working mode, and a correspondence between a register value and information included in a working mode.

The information included in the working mode includes a level, a tearing effect signal, a circuit, a refresh rate, and the like. In other words, the register includes a mapping relationship between a register value and a level, a mapping relationship between a register value and a circuit, and a mapping relationship between a register value and a tearing effect signal.

In some other embodiments of this application, the terminal device presets and stores a correspondence between a level and a register value. Table 3 is a table of a relationship between a level and a register value that is preset by the terminal device in this embodiment of this application.

**Table 3**

| Level | Register value |
|---|---|
| 1.8 V | 1 |
| 0 V | 0 |

As shown in Table 3, when a level is 1.8 V, a corresponding register value is 1; and when a level is 0 V, a corresponding register value is 0.

It is determined, based on the information about the refresh rates and the levels shown in Table 1 in S702 and the information about the levels and the register values shown in Table 3, that a correspondence between a refresh rate, a level, and a register value includes: When a refresh rate is 60 Hz, a corresponding level is 1.8 V, and a corresponding register value is 1; and when a refresh rate is 120 Hz, a corresponding level is 0 V, and a corresponding register value is 0.

It may be understood that each value of the register corresponds to one circuit, and the terminal device uses, based on the register value, the circuit corresponding to the register value.

In some other embodiments of this application, after the terminal device rewrites the register value based on the second level, the terminal device adjusts a tearing effect signal based on the rewritten register value, changes a frame rate based on an adjusted tearing effect signal, and generates image data based on the adjusted tearing effect signal.

The tearing effect signal is used to indicate the terminal device to perform drawing, rendering, and synthesis on a layer to generate the image data. The tearing effect signal is also used to synchronize the refresh rate with the frame rate.

In some other embodiments of this application, after the terminal device changes the refresh rate of the terminal device to the target refresh rate based on the second level, the method further includes: The terminal device adjusts a frame synchronization signal based on the target refresh rate, and refreshes to display an image based on an adjusted frame synchronization signal.

The frame synchronization signal is used to indicate a display panel of the terminal device to refresh to display the image.

It may be understood that the tearing effect signal is generated by the display driver integrated circuit, and is used by a system on chip of the terminal device to change the frame rate, so that a changed frame rate is synchronized with the changed refresh rate. The frame synchronization signal is generated by the display driver integrated circuit based on the refresh rate, and is used by the display panel of the terminal device to change the refresh rate. Specifically, the display panel refreshes to display the image based on the adjusted frame synchronization signal, to change the refresh rate of the display panel. In other words, the tearing effect signal and the frame synchronization signal have a same periodicity and function, but functional components using the tearing effect signal and the frame synchronization signal are different.

In this way, a rate (frame rate) at which the system on chip generates a picture is reversely controlled based on the tearing effect signal, and the refresh rate of the display panel of the terminal device is controlled based on the frame synchronization signal, to synchronize the refresh rate with the frame rate during screen switching, so that refresh rate/frame rate change can be actually completed, and screen tearing caused by changing only the refresh rate and not correspondingly changing the frame rate is avoided.

With reference to the modules of the terminal device shown in FIG. 5 and FIG. 6, the following describes a specific implementation in which the terminal device changes the refresh rate of the terminal device to the target refresh rate based on the second level in S703.

In some embodiments of this application, a mobile industry processor interface-physical of the display driver integrated circuit in a display module receives image data sent by the system on chip, decodes the image data, and drives, through a source driver and a gate driver, the display panel to display an image.

A trigger in the display driver integrated circuit is connected to the input pin of the display driver integrated circuit, obtains the second level from the input pin, and sends the second level to a register in the display driver integrated circuit.

The register in the display driver integrated circuit receives the second level sent by the trigger, and adjusts a register value based on the second level.

It may be understood that the register includes different working modes of the display driver integrated circuit, and each register value corresponds to one working mode. The register is preset with various settings, for example, a correspondence between a register value and a working mode, and a correspondence between a register value and information included in the working mode. The information included in the working mode includes a level, a tearing effect signal, a circuit, a refresh rate, and the like. In other words, the register includes a mapping relationship between a register value and a level, a mapping relationship between a register value and a tearing effect signal, and the like.

In an example, after adjusting the register value, the register sends an adjusted register value to the source driver and the gate driver. The source driver and the gate driver change the refresh rate of the terminal device to the target refresh rate based on a related setting of the register and a setting corresponding to the adjusted register value, and send a frame synchronization signal to the display panel based on the target refresh rate, so that the display panel refreshes to display the image based on the frame synchronization signal, thereby implementing refresh rate change of the display panel.

The register in the display driver integrated circuit is further configured to: adjust, based on the adjusted register value, a tearing effect signal used for synchronization, and send an adjusted tearing effect signal to the system on chip of the terminal device, so that the terminal device changes a frame rate based on the adjusted tearing effect signal. In other words, the system on chip performs drawing, rendering, and synthesis on a layer based on the adjusted tearing effect signal, to generate new image data.

The source driver and the gate driver in the display driver integrated circuit adjust the display panel based on the related setting of the register and the setting corresponding to the adjusted register value, and change the refresh rate of the terminal device to the target refresh rate.

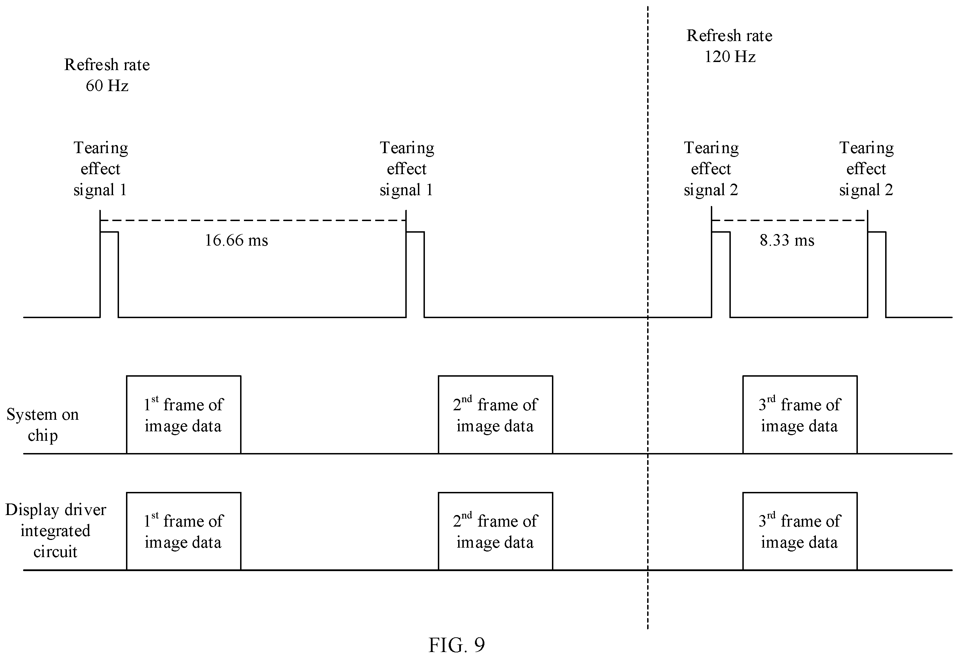

FIG. 9 is a diagram of timing of image drawing by the system on chip of the terminal device and image refresh by the display driver integrated circuit before and after refresh rate change.

Based on the foregoing example, the terminal device sequentially refreshes to display a 1^{st} frame of image and a 2^{nd} frame of image based on the current refresh rate. In a process in which the terminal device displays the 2^{nd} frame of image, if the terminal device detects that the user triggers the preset operation for changing the refresh rate (for example, the user simultaneously presses the Fn key and the R key on the keyboard), the terminal device determines the target refresh rate in response to the preset operation. The terminal device changes a level of the general-purpose input/output interface in the terminal device based on the target refresh rate, and sends a changed level to the display driver integrated circuit. The display driver integrated circuit in the terminal device receives the changed level, and adjusts the current refresh rate to the target refresh rate based on the changed level. The terminal device displays a 3^{rd} frame of image based on the adjusted target refresh rate. A display control chip in the terminal device may further adjust a tearing effect signal based on the changed level, so that the terminal device generates an image based on an adjusted tearing effect signal.

As shown in FIG. 9, the 1^{st} frame of image and the 2^{nd} frame of image are images displayed by the terminal device before refresh rate change. The 3^{rd} frame of image is an image displayed by the terminal device after refresh rate change.

In this embodiment of this application, the terminal device may detect the preset operation in a process of displaying each frame of image. The image display process includes an image transmission slot and effective image transmission time. In other words, in this embodiment of this application, the terminal device may perform refresh rate change at any time of image display, and does not need to perform refresh rate change only in the image transmission slot as in a conventional technology. In addition, in this embodiment of this application, the terminal device performs refresh rate change based on a level change, and the terminal device does not need to deliver a change instruction.

For example, screen refresh rates of the terminal device that correspond to the 1^{st} frame of image and the 2^{nd} frame of image are 60 Hz, and a periodicity of a corresponding tearing effect signal (for example, a signal TE1) is 16.66 ms. The terminal device receives the preset operation, and changes the refresh rate in response to the preset operation. After change, the refresh rate of the terminal device is 120 Hz, and a periodicity of a corresponding tearing effect signal (for example, a signal TE2) is 8.33 ms. In FIG. 9, a tearing effect signal is represented by using a pulse.

As shown in FIG. 9, in some embodiments of this application, when the refresh rate of the terminal device is 60 Hz, the system on chip performs drawing, rendering, and synthesis on a layer within 16.66 ms based on the signal TE1, to obtain image data, and transmits the image data to the display driver integrated circuit. When a next signal TE1 is received, an image is drawn again to obtain a next frame of image data, and the next frame of image data is sent to the display driver integrated circuit.

Correspondingly, the display driver integrated circuit displays the image data within 16.66 ms based on the signal TE1. When the next signal TE1 is received, the next frame of image data (that is, the next frame of image data sent by the system on chip) is displayed through refresh.

As shown in FIG. 9, in some other embodiments of this application, after the refresh rate of the terminal device is changed from 60 Hz to 120 Hz, the system on chip performs drawing, rendering, and synthesis on a layer within 8.33 ms based on the signal TE2, to obtain image data, and transmits the image data to the display driver integrated circuit. When a next signal TE2 is received, an image is drawn again to obtain a next frame of image data, and the next frame of image data is sent to the display driver integrated circuit.

Correspondingly, the display driver integrated circuit displays the image data within 8.33 ms based on the signal TE2. When the next signal TE2 is received, the next frame of image data (that is, the next frame of image data sent by the system on chip) is displayed through refresh.

In this way, in the solution provided in this embodiment of this application, in the method, the terminal device determines the target refresh rate in response to the preset operation; changes the first level of the terminal device to the second level based on the target refresh rate; and changes the refresh rate of the terminal device to the target refresh rate based on the second level. Refresh rate change is implemented by changing the level, and refresh rate change is implemented without depending on an interface function such as a change instruction. This optimizes a refresh rate change manner.

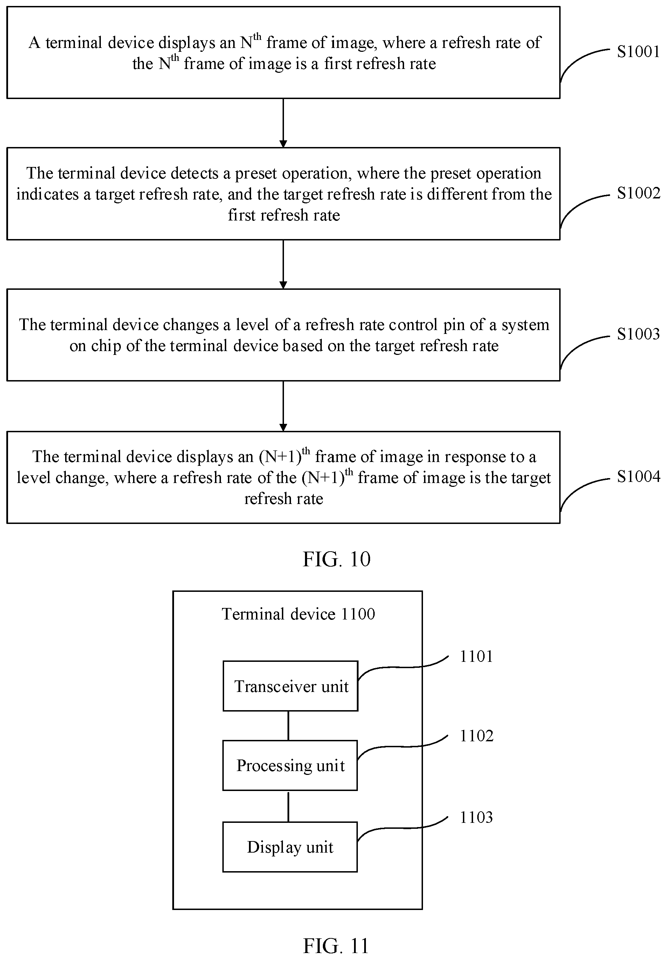

FIG. 10 is a schematic flowchart of another refresh rate change method according to an embodiment of this application. The method includes the following steps S1001 to S1004.

S1001: A terminal device displays an N^{th} frame of image, where a refresh rate of the N^{th} frame of image is a first refresh rate.

S1002: The terminal device detects a preset operation, where the preset operation indicates a target refresh rate, and the target refresh rate is different from the first refresh rate.

Optionally, a specific implementation in which the terminal device detects the preset operation, where the preset operation indicates the target refresh rate is described in S701 above. Details are not described herein again.

In this embodiment of this application, for a specific implementation in which modules of the terminal device detect the preset operation and determine the target refresh rate, refer to the foregoing descriptions in FIG. 5. Details are not described herein again.

S1003: The terminal device changes a level of a refresh rate control pin of a system on chip of the terminal device based on the target refresh rate.

In this embodiment of this application, the terminal device determines, based on a preset correspondence, a level corresponding to the target refresh rate; and changes the current level of the refresh rate control pin of the system on chip of the terminal device to the level corresponding to the target refresh rate.

The preset correspondence is a correspondence between a refresh rate and a level. In this embodiment of this application, a specific implementation in which the terminal device determines, based on the preset correspondence, the level corresponding to the target refresh rate is described in S702 above. Details are not described herein again.

In this embodiment of this application, the refresh rate control pin is a pin, in a general-purpose input/output port of the system on chip, pre-configured to indicate a refresh rate change.

In this embodiment of this application, the terminal device includes a display driver integrated circuit, and the display driver integrated circuit includes an input pin. After the terminal device changes the level of the refresh rate control pin of the system on chip of the terminal device based on the target refresh rate, a level of the input pin changes in response to the level change of the refresh rate control pin.

S1004: The terminal device displays an (N+1)^{th} frame of image in response to the level change, where a refresh rate of the (N+1)^{th} frame of image is the target refresh rate.

In this embodiment of this application, the terminal device rewrites a register value of the terminal device based on a changed level in response to the level change. The terminal device changes a refresh rate of the terminal device to the target refresh rate based on a rewritten register value of the terminal device. The terminal device displays the (N+1)^{th} frame of image based on the target refresh rate.

In this embodiment of this application, with reference to the modules of the terminal device shown in FIG. 5 and FIG. 6, the terminal device includes the system on chip, the display driver integrated circuit, and a display panel, and the display driver integrated circuit includes a register. That the terminal device displays an (N+1)^{th} frame of image in response to the level change includes: The display driver integrated circuit rewrites a register value of the register based on the changed level in response to the level change of the refresh rate control pin. The display driver integrated circuit changes a refresh rate of the display driver integrated circuit to the target refresh rate based on a rewritten register value of the register. The display driver integrated circuit drives, based on the target refresh rate, the display panel to display the (N+1)^{th} frame of image.

In this embodiment of this application, after obtaining the rewritten register value of the terminal device, the terminal device adjusts a tearing effect signal of the terminal device based on the rewritten register value of the terminal device. The terminal device changes a frame rate of the terminal device based on an adjusted tearing effect signal, and generates the (N+1)^{th} frame of image based on a changed frame rate.

The tearing effect signal is used to synchronize a refresh rate with a frame rate.

In this embodiment of this application, with reference to the modules of the terminal device shown in FIG. 5 and FIG. 6, the display driver integrated circuit adjusts a tearing effect signal of the display driver integrated circuit based on the rewritten register value of the register. The display driver integrated circuit sends an adjusted tearing effect signal to the system on chip. The system on chip changes a frame rate of the system on chip based on the adjusted tearing effect signal, and generates the (N+1)^{th} frame of image based on a changed frame rate.

Optionally, for descriptions of specific implementations and beneficial effect in the foregoing steps, refer to the foregoing corresponding method embodiment. Details are not described herein again.

With reference to FIG. 4 to FIG. 10, the foregoing describes in detail the refresh rate change method provided in embodiments of this application. With reference to FIG. 11, the following describes in detail a terminal device provided in embodiments of this application.

In a possible design, FIG. 11 is a diagram of a structure of a terminal device according to an embodiment of this application. As shown in FIG. 11, the terminal device 1100 may include a transceiver unit 1101, a processing unit 1102, and a display unit 1103. The terminal device 1100 may be configured to implement functions of the terminal device in the foregoing method embodiments.

Optionally, the transceiver unit 1101 is configured to support the terminal device 1101 in interacting with another terminal device.

Optionally, the processing unit 1102 is configured to support the terminal device 1100 in performing S701, S702, and S703 in FIG. 7, and/or is configured to support the terminal device 1100 in performing S1002 and S1003 in FIG. 10.

Optionally, the display unit 1103 is configured to support the terminal device 1100 in performing S1001 and S1004 in FIG. 10.

The transceiver unit may include a receiving unit and a sending unit, may be implemented by a transceiver or a transceiver-related circuit component, and may be a transceiver or a transceiver module.

Optionally, the terminal device 1100 shown in FIG. 11 may further include a storage unit (not shown in FIG. 11), and the storage unit stores a program or instructions. When the transceiver unit 1104, the processing unit 1102, and the display unit 1103 execute the program or the instructions, the terminal device 1100 shown in FIG. 11 may perform the refresh rate change method in the foregoing method embodiments.

Operations and/or functions of the units in the terminal device 1100 are separately intended to implement corresponding procedures of the refresh rate change method in the foregoing method embodiments. All related content of the steps in the foregoing method embodiments may be cited to function descriptions of corresponding functional units. For brevity, details are not described herein again.

For technical effect of the terminal device 1100 shown in FIG. 11, refer to the technical effect of the refresh rate change method provided in the foregoing method embodiments. Details are not described herein again.

In addition to a form of the terminal device 1100, the technical solutions provided in this application may also be a functional unit or a chip in the terminal, or an apparatus that is used together with the terminal.

An embodiment of this application further provides a chip system, including a processor. The processor is coupled to a memory. The memory is configured to store a program or instructions. When the program or the instructions are executed by the processor, the chip system is enabled to implement the method according to any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in embodiments of this application. For example, the memory may be a non-transitory processor, for example, a read-only memory (read-only memory, ROM). The memory and the processor may be integrated into a same chip, or may be separately disposed on different chips. A type of the memory and a manner of disposing the memory and the processor are not specifically limited in embodiments of this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processing circuit (digital signal processor, DSP), a microcontroller (microcontroller unit, MCU), a programmable controller (programmable logic device, PLD), or another integrated chip.

It should be understood that the steps in the foregoing method embodiments may be completed by using an integrated logic circuit of hardware in the processor or instructions in a form of software. The method steps disclosed with reference to embodiments of this application may be directly performed and completed by a hardware processor, or may be performed and completed by using a combination of hardware in the processor and a software module.

An embodiment of this application further provides a computer-readable storage medium. The computer-readable storage medium stores a computer program. When the computer program is run on a computer, the computer is enabled to perform the foregoing related steps, to implement the refresh rate change method in the foregoing embodiments.

An embodiment of this application further provides a computer program product. When the computer program product runs on a computer, the computer is enabled to perform the foregoing related steps, to implement the refresh rate change method in the foregoing embodiments.

In addition, an embodiment of this application further provides an apparatus. The apparatus may be specifically a component or a module, and the apparatus may include one or more processors and memories that are connected to each other. The memory is configured to store a computer program. When the computer program is executed by the one or more processors, the apparatus is enabled to perform the refresh rate change method in the foregoing method embodiments.

The apparatus, the computer-readable storage medium, the computer program product, or the chip provided in embodiments of this application is configured to perform the corresponding method provided above. Therefore, for beneficial effect that can be achieved, refer to the beneficial effect in the corresponding method provided above. Details are not described herein again.

Method or algorithm steps described in combination with the content disclosed in embodiments of this application may be implemented by hardware, or may be implemented by a processor by executing software instructions. The software instructions may include a corresponding software module. The software module may be stored in a random access memory (random access memory, RAM), a flash memory, a read-only memory, an erasable programmable read-only memory (erasable programmable read-only memory, EPROM), an electrically erasable programmable read-only memory (electrically erasable programmable read-only memory, EEPROM), a register, a hard disk, a removable hard disk, a compact disc read-only memory (compact disc read-only memory, CD-ROM), or any other form of storage medium well known in the art. For example, the storage medium is coupled to a processor, so that the processor can read information from the storage medium and write information into the storage medium. Certainly, the storage medium may alternatively be a component of the processor. The processor and the storage medium may be located in an application-specific integrated circuit (application-specific integrated circuit, ASIC).

The foregoing descriptions of the implementations allow a person skilled in the art to clearly understand that, for the purpose of convenient and brief description, division into the functional modules is merely used as an example for description. During actual application, the foregoing functions may be allocated to different functional modules for implementation as required. In other words, an inner structure of the apparatus is divided into different functional modules to implement all or some of the functions described above. For a detailed working process of the foregoing system, apparatus, and unit, refer to a corresponding process in the foregoing method embodiments. Details are not described herein again.

In several embodiments provided in this application, it should be understood that the disclosed methods may be implemented in other manners. The foregoing described apparatus embodiments are merely examples. For example, division into the modules or units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the modules or units may be implemented in electrical, mechanical, or other forms.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

The computer-readable storage medium includes but is not limited to any one of the following: any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A refresh rate change method, wherein the method comprises:
displaying, by a terminal device, an N^{th} frame of image, wherein a refresh rate of the N^{th} frame of image is a first refresh rate;
detecting, by the terminal device, a preset operation, wherein the preset operation indicates a target refresh rate, and the target refresh rate is different from the first refresh rate;
changing, by the terminal device, a level of a refresh rate control pin of a system on chip of the terminal device based on the target refresh rate; and
displaying, by the terminal device, an (N+1)^{th} frame of image in response to the level change, wherein a refresh rate of the (N+1)^{th} frame of image is the target refresh rate.

2. The refresh rate change method according to claim 1, wherein the changing, by the terminal device, a level of a refresh rate control pin of a system on chip of the terminal device based on the target refresh rate comprises:
determining, by the terminal device based on a preset correspondence, a level corresponding to the target refresh rate, wherein the preset correspondence is a correspondence between a refresh rate and a level; and
changing the current level of the refresh rate control pin of the system on chip of the terminal device to the level corresponding to the target refresh rate.

3. The refresh rate change method according to claim 1 or 2, wherein the refresh rate control pin is a pin, in a general-purpose input/output port of the system on chip, pre-configured to indicate a refresh rate change.

4. The refresh rate change method according to any one of claims 1 to 3, wherein the terminal device comprises a display driver integrated circuit, and the display driver integrated circuit comprises an input pin; and after the changing, by the terminal device, a level of a refresh rate control pin of a system on chip of the terminal device based on the target refresh rate, the method further comprises:
correspondingly changing, by the input pin, a level of the input pin in response to the level change of the refresh rate control pin.

5. The refresh rate change method according to any one of claims 1 to 4, wherein the displaying, by the terminal device, an (N+1)^{th} frame of image in response to the level change comprises:
rewriting, by the terminal device, a register value of the terminal device based on a changed level in response to the level change;
changing, by the terminal device, a refresh rate of the terminal device to the target refresh rate based on a rewritten register value of the terminal device; and
displaying, by the terminal device, the (N+1)^{th} frame of image based on the target refresh rate.

6. The refresh rate change method according to claim 4 or 5, wherein the terminal device further comprises a display panel, and the display driver integrated circuit comprises a register; and the displaying, by the terminal device, an (N+1)^{th} frame of image in response to the level change comprises:
rewriting, by the display driver integrated circuit, a register value of the register based on the changed level in response to the level change of the refresh rate control pin;
changing, by the display driver integrated circuit, a refresh rate of the display driver integrated circuit to the target refresh rate based on a rewritten register value of the register; and
driving, by the display driver integrated circuit based on the target refresh rate, the display panel to display the (N+1)^{th} frame of image.

7. The refresh rate change method according to claim 5, wherein after the terminal device obtains the rewritten register value of the terminal device, the method further comprises:
adjusting, by the terminal device, a tearing effect signal of the terminal device based on the rewritten register value of the terminal device, wherein the tearing effect signal is used to synchronize the refresh rate with a frame rate; and
changing, by the terminal device, the frame rate of the terminal device based on an adjusted tearing effect signal, and generating the (N+1)^{th} frame of image based on a changed frame rate.

8. The refresh rate change method according to claim 6, wherein after the display driver integrated circuit obtains the rewritten register value of the register, the method further comprises:
adjusting, by the display driver integrated circuit, a tearing effect signal of the display driver integrated circuit based on the rewritten register value of the register;
sending, by the display driver integrated circuit, an adjusted tearing effect signal to the system on chip; and
changing, by the system on chip, a frame rate of the system on chip based on the adjusted tearing effect signal, and generating the (N+1)^{th} frame of image based on a changed frame rate.

9. A terminal device, wherein the terminal device comprises a system on chip, a display driver integrated circuit, and a display panel, the system on chip comprises a refresh rate control pin, and the terminal device comprises:
the display panel, configured to display an N^{th} frame of image, wherein a refresh rate of the N^{th} frame of image is a first refresh rate;
the system on chip, configured to detect a preset operation, wherein the preset operation indicates a target refresh rate, and the target refresh rate is different from the first refresh rate, wherein
the system on chip is further configured to change a level of the refresh rate control pin of the system on chip based on the target refresh rate; and
the display driver integrated circuit, configured to drive, in response to the level change, the display panel to display an (N+1)^{th} frame of image, wherein a refresh rate of the (N+1)^{th} frame of image is the target refresh rate, wherein
the display panel is further configured to display the (N+1)^{th} frame of image.

10. The terminal device according to claim 9, wherein
the system on chip is further configured to determine, based on a preset correspondence, a level corresponding to the target refresh rate, wherein the preset correspondence is a correspondence between a refresh rate and a level; and
the system on chip is further configured to change the current level of the refresh rate control pin to the level corresponding to the target refresh rate.

11. The terminal device according to claim 9 or 10, wherein the display driver integrated circuit comprises a register, wherein
the display driver integrated circuit is further configured to rewrite a register value of the register based on a changed level in response to the level change of the refresh rate control pin;
the display driver integrated circuit is further configured to change a refresh rate of the display driver integrated circuit to the target refresh rate based on a rewritten register value of the register; and
the display driver integrated circuit is further configured to drive, based on the target refresh rate, the display panel to display the (N+1)^{th} frame of image.

12. The terminal device according to any one of claims 9 to 11, wherein
the display driver integrated circuit is further configured to adjust a tearing effect signal of the display driver integrated circuit based on the rewritten register value of the register;
the display driver integrated circuit is further configured to send an adjusted tearing effect signal to the system on chip; and
the system on chip is further configured to: change a frame rate of the system on chip based on the adjusted tearing effect signal, and generate the (N+1)^{th} frame of image based on a changed frame rate.

13. A terminal device, wherein the terminal device comprises a processor and a memory; the memory is coupled to the processor; the memory is configured to store computer-readable instructions; and when the processor reads the computer-readable instructions from the memory, the terminal device is enabled to perform the method according to any one of claims 1 to 8.

14. A chip system, comprising at least one processor and at least one interface circuit, wherein the at least one interface circuit is configured to: perform a transceiver function, and send instructions to the at least one processor; and when the at least one processor executes the instructions, the at least one processor performs the method according to any one of claims 1 to 8.

15. A computer-readable storage medium, wherein the computer-readable storage medium comprises a computer program; and when the computer program is run on a terminal device, the terminal device is enabled to perform the method according to any one of claims 1 to 8.

16. A computer program product, wherein when the computer program product runs on a computer, the computer is enabled to perform the method according to any one of claims 1 to 8.
